# EUROPEAN PATENT APPLICATION

(11) **EP 0 950 563 A1**
(43) Date of publication of application: **20.10.1999**
(21) Application number: 99107175.4
(22) Date of filing: 13.04.1999
(51) Int. Cl.: B60Q 1/068

(54) **Modular lighting unit for a vehicle optical assembly**

(30) Priority: 17.04.1998 IT TO980333
(71) Applicant: MAGNETI MARELLI S.p.A., 20145 Milano (IT)
(72) Inventor: Ressia, Alessio, 10073 Cirie' (IT); Barbero, Marco, 10147 Torino (IT)
(74) Representative: Eccetto, Mauro

(57) **Abstract**

Preassembled modular lighting unit (1) integrating the optical and regulating functions of an optical group (2) for a vehicle: Within a housing canopy (5) provided with securing means (6) to a support structure (3) on the vehicle, a bulb carrier sub-group (7) secured integrally with the containing canopy (5), a reflector (8) directional in relation to the containing canopy (5) and regulating means (9) to direct the reflector (8) are located: On the containing canopy (5) a plurality of sliding seats (35, 36, 37, 38) are located in preset positions for passing insertion of a regulating component (40), which is selectively inserted in a sliding manner in a prefixed one (35) of the said seats and cooperates with the reflector (8) to displace the latter in relation to the containing canopy (5). The prefixed containing seat (35) for the regulating component (40) may be suitably selected on the basis of the vehicle overall dimensions or other components adjacent to the modular unit (1), which is thus applicable to various vehicles, without requiring complex adaptation means.

## Description

The present invention relates to a lighting modular unit for a vehicle optical group.

Typically, a vehicle optical group, in particular a motor vehicle comprises at least a light source, a reflector to return the light emitted by the source in the required direction and trim adjuster components to vary the orientation of the reflector in relation to the vehicle: the whole may be advantageously located within a housing, closed at the front by a glass window and mounted in a prefixed position on the vehicle.

Preassembled optical groups are known within which are initially fitted the various components listed above: The optical group is then fitted on the vehicle. In general, each vehicle requires specific optical groups, and consequently the preassembled optical groups cannot normally be used on different vehicles, having to adapt either to the aesthetic line of the various vehicles, or to their structural and overall dimensional characteristics.

Typically they are the configurations of the housing and of the optical group glass to be integrated in the overall typical line of the vehicle, hereby proving different for different for different vehicles; furthermore the dimensions and the positions of the various internal optical and regulating components of the optical group must be compatible with the overall dimensions allowed by the various vehicle models. Thus, as a rule it is necessary to produce these components in differing configurations also, since although they have the same functions, they have to be made suitable for various types of vehicle: each vehicle thus requires at least a given number of specific components not used on other vehicles.

A purpose of the present invention is to overcome the aforementioned disadvantages, providing a modular lighting unit applicable to different vehicle optical groups, which integrate the optical and the regulating functions of the group and at the same time remains simple and economical to manufacture.

In particular it is a purpose of the invention to provide a modular unit wherein the light beam regulating orientation components may be suitably arranged in various positions according to the type of vehicle to which the unit is fitted, without the need for complex adaptations or long and difficult fitting operations.

According to the predefined purpose, the present invention relates to a modular lighting unit for a vehicle optical group, characterised in that it is a preassembled unit applicable as a whole to a support unit for the said optical group, the said modular unit comprising a containing canopy, means of securing the said containing canopy to the said support structure, at least a bulb carrier sub-group carried integrally by the said containing canopy, at least a reflector directional in relation to the said containing canopy and means of regulating the orientation of the said reflector.

In particular, the said regulation means comprise in turn at least a regulation component to displace the said reflector in relation to the said containing canopy and a plurality of sliding seats for the passing insertion of the said at least one regulating component, located in different respective positions on the said containing canopy and defining respective different sliding directions for the said at least one regulating component; the said at least one regulating component being selectively inserted sliding in a prefixed unit of the said plurality of sliding seats.

According to a preferred operating form, the said securing means for the said containing canopy on the support structure comprise at least a releasable securing component, borne integral with the said containing canopy and able to cooperate with at least a respective hook portion of the said support structure to secure the said containing canopy to the said support structure; the said at least one securing releasable means being also provided with retaining components to ensure the sealed coupling between the said containing canopy and the said support structure.

The modular lighting unit according to the invention, integrating optical and regulating functions, thus allows problem-free application to various optical groups, having configurations specific to differing vehicles: in that manner, the said modular unit may be produced in a single form then applied to various vehicles, with a simplification of the industrial production processes and a reduction in overall production costs; the modular lighting unit according to the invention is also of simple and economical design and allows simple and rapid installation.

In particular, the regulating component, which allows the correct positioning of the light beam emitted by the modular lighting unit, may be selectively arranged in the position most suitable for the particular application, determined for instance on the basis of the dimensions of other components of the vehicle.

In addition, the modular unit according to the invention is coupled in a sealed manner with the relative vehicle support structure, thus protecting it against eventual infiltrations and external agents and electrical contacts and the regulating components.

Other characteristics and advantages of this invention will clearly appear from the following description of an operating example, only quoted for the purpose of a non-restrictive example, with reference to the figures in the appended drawings wherein:
- figure 1 is an assembly rear view of a modular lighting unit according to the invention;
- figure 2 is a sectional view along line II-II of the modular lighting unit in figure 1;
- figure 3 is a sectional view along line III-III of the modular lighting unit in figure 1, in which other vehicle optical group components are visible as provided with such a modular lighting unit;
- figure 4 is a vertical sectional view of a detail of the modular lighting unit according to the invention.

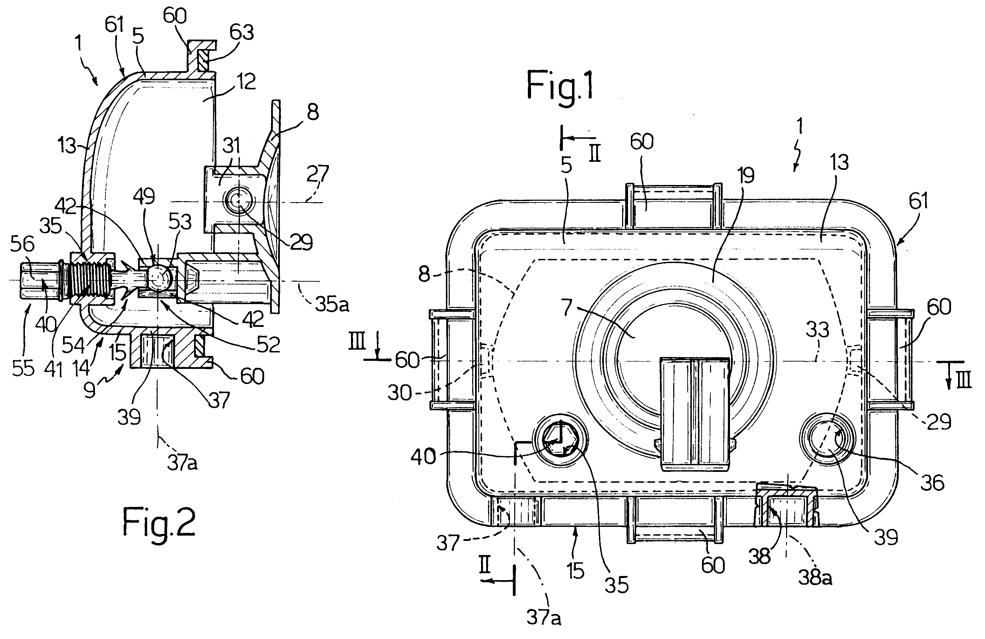

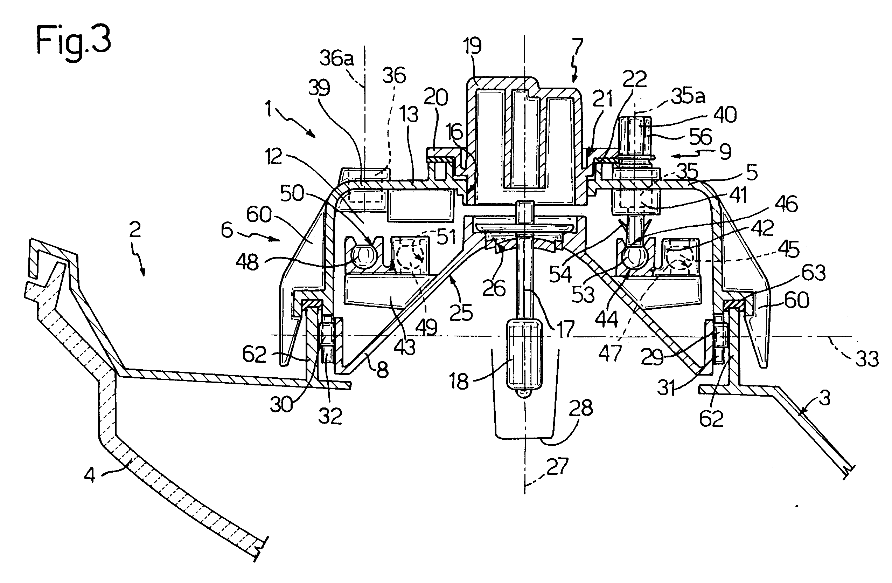

With regard to figures 1 to 3, reference 1 indicates the whole assembly of a modular lighting unit for the optical group 2 of a vehicle, for instance a motor vehicle, illustrated in part only in figure 3 for the sake of simplicity. In the non-restrictive case in point illustrated in figures 1 to 3, the optical group 2 represents the right-hand headlight of a motor vehicle and comprises a support structure 3, fitted in a known manner to the vehicle, and a suitably profiled glass 4.

The support structure 3 and the glass 4 of the optical group 2 constitute two typical customised vehicle components, and may thus have differing configurations depending on the vehicle model. According to the present invention, however, the modular lighting unit 1 is a preassembled unit which, once completed in a single version, may be applied integrally as a whole to various optical groups.

In particular, the modular unit 1 comprises a containing canopy 5, means for securing 6 the containing canopy 5 to the support structure 3, a bulb-carrier sub-group 7 borne integrally by the containing canopy 5, at least one reflector 8 directional in relation to the containing canopy 5 and regulating means 9 for the orientation of the reflector 8.

The containing canopy 5 is shaped in such a manner as to define a concave housing 12 within which are located the reflector 8 and the various regulating means 9. In particular, the containing canopy 5 has a bottom face 13 of essentially rectangular shape, which in service faces the glass 4 and thereby, in the non-restrictive case in point illustrated in figures 1 to 3, in an essentially vertical and orthogonal position in relation to the direction of movement of the vehicle. From a lower edge 14 of the bottom wall 13 a side face 15 extends as an overhang, in a direction essentially orthogonal to the bottom face 13.

The bottom face 13 of the containing canopy 5 also has a passing aperture 16, for instance essentially circular: the bulb carrier sub-group 7 is secured in a known manner, to the containing canopy 5 to meet the aperture 16, on closure thereof, in such a way that a bulb carrier component 17 complete with its relevant bulb 18 extends within the concave housing 12 defined by the containing canopy 5, in the direction of the glass 4. In particular, this bulb carrier sub-group 7 comprises in turn a body 19, for instance cylindrical, having an annular edge 20 securing it to the containing canopy 5, to which it is secured in a known manner, and from which bulb 18 extends. As illustrated preferably in particular in figure 3, the bulb carrier sub-group 7 is integrally coupled in a sealed manner with the containing canopy 5, by means of suitable securing means 21 (known and not illustrated in detail for the sake of simplicity) and relative retaining components 22, for instance an elastomer material retaining ring, located to meet the annular securing edge 20.

The reflector 8, having an essentially known type of profile, presents a reflecting surface 25, essentially hollow, turned towards the glass 4, and also has a central hole 26 through which the bulb 18 is inserted, in such a way that said bulb positions itself along an optical axis 27 of the reflector 8. The bulb 18 in turn has a masking screen 28, also known.

In the non-restrictive example of the case in point illustrated in figures 1 to 3, the reflector 8 is secured to the containing canopy 5 by means of two pins 29, 30 with which the reflector 8 is fitted, extending from opposite sidebands in an essentially orthogonal direction to the optical axis 27; the pins 29, 30 are releasably coupled with respective securing parts 31, 32 of the containing canopy 5 and define respective rotation articulations of the reflector 8, which as a result is able to rotate in relation to the containing canopy 5 about a rotation axis 33 passing through the said articulations.

The possibility of rotating the reflector 8 about the rotation axis 33 allows the orientation of the said reflector 8 to be varied in relation to the containing canopy 5 and thereby allows the adjustment in the vertical direction of the position of the whole of the optical group 2, by means of the action of regulating means 9: for that purpose according to the invention, the containing canopy 5 has a plurality of potential sliding seats 35, 36, 37, 38 which when used are internally threaded, for the passing insertion of a regulating component 40, in turn provided with a threaded shaft 41 matching the internal thread of the sliding seats 35, 36, 37, 38.

In service as will be clearly described further on, the regulating component 40 is inserted into one of the predefined sliding seats 35, 36, 37, 38: for instance as illustrated in figures 1 to 3, into the sliding seat 35. According to the invention, sliding seats 35,37,38 which are not used for the regulating component 40 have closure means 39, for instance defined by respective parts of the bottom face 13 or of the side face 15 of the containing canopy 5.

The sliding seats 35, 36, 37, 38, alternatively able to receive the regulating component 40, are arranged in respective specific positions on the containing canopy 35a, 36a, 37a, 38a and define respective sliding directions as predetermined: in particular a first pair of sliding seats 35,36 defining first the sliding directions 35a,36a parallel with each other, is formed through the bottom face 13 of the containing canopy 5, whereas a second pair of sliding seats 37,38 is formed passing through the side face 15 of the containing canopy 5, in such a manner as to respectively define second sliding directions 37a,38a parallel with each other and essentially orthogonal with the first sliding directions 35a,36a.

In addition, the sliding seats 35, 36 formed in the bottom side 13 of the containing canopy 5 are located on opposing bands in relation to the centre of the latter:-in a similar way the sliding seats 37, 38 formed in the side face 15 of the containing canopy 5 are located in opposing bands in relation to the centre of the latter and staggered in relation to the sliding seats 35, 36 in such a manner that the sliding directions 35a, 36a, 37a, 38a do not intersect each other in a reciprocal manner.

The regulating means 9 also comprise two small regulating blocks 42, 43 with which the reflector 8 is provided, these extending as an overhang of the opposing face of the reflector 8 to the reflecting surface 25 and arranged on opposing side bands in relation to the optical axis 27 of the reflector and of the same part of the axis of rotation 33; the small regulating block 42 in turn has two ball coupling seats 44, 45 having respective apertures 46, 47 in an essentially orthogonal direction to each other: in similar manner, regulating block 43 has two ball coupling seats 48, 49 with respective apertures 50, 51 in essentially orthogonal direction to each other. The four coupling seats 44, 48, 45, 49 are respectively arranged to match the sliding seats 35, 36, 37, 38 of the containing canopy 5, and their apertures 46, 50, 47, 51 are respectively in line with the sliding directions 35a, 36a, 37a, 38a.

The regulating component 40 is provided at its own first end 52, with a ball head 53 releasable coupling with the ball coupling seats 44, 45, 48, 49 of the regulating blocks 42, 43 of the reflector 8, in which it may be inserted by means of the respective apertures 46,47,50,51; at a predefined distance from the first end 52, the regulating component 40 is also fitted with thread-locking strips 54 of an essentially known type.

As previously described, the regulating component 40 has a threaded shaft 41 able to engage internal threading on the sliding seats 35, 36, 37, 38 and at its other second end 55, opposite the first end 52 a gripping portion 56, for instance an hexagonal head, allowing an operative to easily grip the regulating component 40 and in particular to rotate it in such a way that the threaded pin 41 is screwed down between the sliding seats 35, 36, 37, 38.

The lighting modular unit 1 comprises in addition the already quoted securing means 6 for the containing canopy 5 on to the support structure 3: in particular the securing means 6 comprise four releasable securing components 60, for instance consisting of respective flexible strips, borne integral by an external edge 61 of the containing canopy 5 and able to cooperate with respective hooking portions 62 of the support structure 3, consisting for instance of respective projections extending to overhang from the said support structure 3. The four securing components 60 are located 2 x 2 diametrically opposite on the outer edge 61 of the containing canopy 5.

As illustrated, in particular in figure 3, the securing components 60 have sealed locking means 63, of any known type, to ensure a fluid-sealed coupling between the containing canopy 5 and the support structure 3: as an example the fluid-sealed coupling 63 may consist of elastomer material retaining rings, or of adhesive or sealing material.

At the installation stage, the modular unit 1 is initially assembled and successively applied to the support structure 3, by means of the releasable securing components 60. As the specific requirements and particularly those in relation to questions of dimensions which are presented by various vehicles wherein the modular unit 1 is to be applied, the regulating component means 40 is inserted in a single predefined suitably selected sliding seat 35,36,37,38: as an example, as illustrated in figures 1 to 3 in the sliding seat 35; the regulating component 40 is thus inserted rotating the relevant gripping portion 56, within the preselected sliding seat 35, in such a way that its threaded pin 41 engages with the corresponding thread of the sliding seat 35; the ball head 53 of the regulating component 40 can thus be releasably coupled with the corresponding ball coupling seat 44: a further rotation of the threaded pin 41 allows at that stage the displacement of the reflector 8 in relation to the containing canopy 5 and finally allows the adjustment of the optical group position 2.

The presence of the thread-locking strip 54 prevents extraction of the regulating means 40 from the predefined sliding seat 35 once the regulating means 40 itself has been inserted therein and coupled releasably with the corresponding coupling seat 44 by means of its ball head 53.

The sliding seats 36, 37, 38 not engaged by the regulating component 40 are closed instead by the closure components 39, in order to maintain hermetically closed the concave housing 12 in service. According to the preferred actuation form illustrated in figures 1 to 3, and as previously described, the closure elements 39 are defined by respective portions of the bottom face 13 and of the side face 15 of the containing canopy 5: once the most suitable sliding seat of the sliding seats 35,36,37,38 has been selected, the wall of the containing canopy 5 is drilled at that particular point, to allow insertion of the regulating component 40.

It is clear that the regulating component 40 may be inserted into any one of the sliding seats 35,36,37,38. It is also evident that the closure components 39 of the sliding seats 35, 36, 37, 38 not engaged by the regulating component 40 may be achieved in a manner differing from that already described, for instance in the form of removable plugs, applicable to the sliding seats 35, 36, 37, 38 in any known manner.

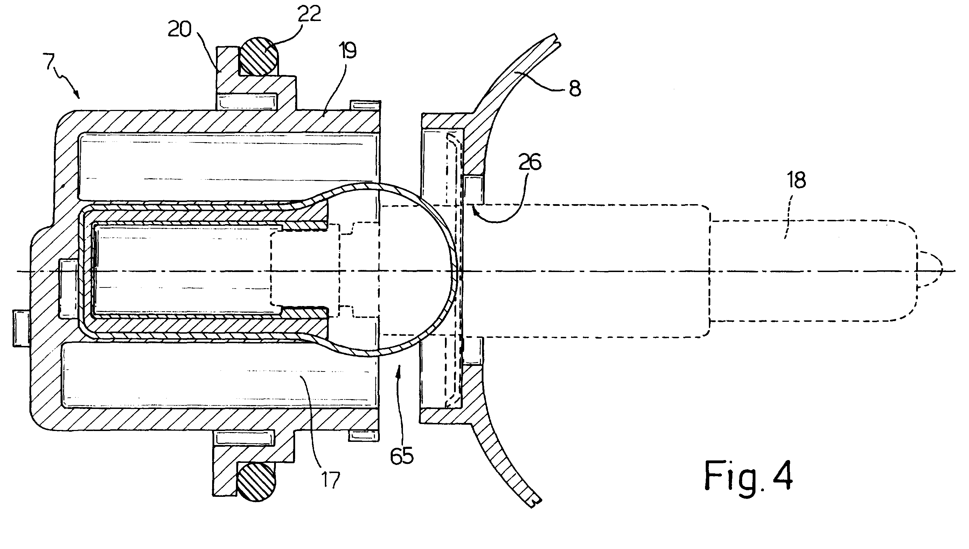

According to a preferred form of implementation, illustrated particularly in figure 4, whereas the bulb carrier component 17 is integrally secured to the containing canopy 5, the bulb 18 is movable in relation to the bulb carrier component 17 and thereby also the containing canopy 5 and is fixed integrally to the reflector 8: Suitable securing articulated means 65 ensure the electrical continuity between the bulb carrier component 17 and the bulb 18.

In that case should the orientation of the reflector 8 be modified in relation to the containing canopy 5 and thereby finally, in relation to the vehicle, the bulb 18 is moved integral with the reflector 8, thus always maintaining itself in the correct position in relation thereto (for instance to correspond with a focus point of the reflector 8) and thereby avoiding eventual de-focusing problems.

Finally, it is clear that the modular lighting unit described above may be the subject of numerous modifications and variations which do not exceed the scope of the claims.

As an example provision may be made to allow the orientation adjustment of the reflector 8, other than in the vertical direction as previously described, but also in other directions: in the event, several regulating components 40 may be used of the type as described or of a different nature.

In addition, the closure of the sliding seats 35,36, 37,38 could be achieved in a different manner from that previously described: in particular the sliding seats 35,36,37,38 could have differing closure components compared with those already described, for instance thin foils or removable plugs; in the event, during the installation stage, the only predetermined sliding seat 35, intended for the insertion of the regulating component 40, would remain open (piercing the relevant foil or removing the plug), to allow the insertion of the regulating component 40.

## Claims

1. Modular lighting unit (1) for a vehicle optical group (2) characterised in that it is a pre-assembled unit applicable as a whole to a support structure (3) of the said optical group (2), the said modular unit (1) comprising a containing canopy (5), securing means (6) for the said containing canopy (5) to the said support structure (3), at least a bulb-carrier subgroup (7) carried integral by the said containing canopy (5), at least a reflector directional in relation to the said containing canopy (5) and regulating means (9) for the orientation of the said reflector (8).

2. Modular unit (1) according to claim 1, characterised in that the said regulating means (9) comprise in turn at least a regulating component (40) to displace the said reflector (8) in relation to the said containing canopy (5) and a plurality of sliding seats (35,36,37,38) for the passing insertion of the said at least one regulating component (40) located in respective specific positions on the said containing canopy (5) and defining respective differing sliding directions (35a, 36a, 37a, 38a) for at least one regulating component (40), the said at least one regulating component (40) being sliding inserted selectively in a predefined unit (35) of the said plurality of sliding seats (35, 36, 37, 38).

3. Modular unit (1) according to claim 1, characterised in that it comprises a first pair (35,36) of the said sliding seats for inserting the said at least one regulating component (40), defining respective first sliding directions (35a,36a) for the said at least one regulating component (40) parallel with each other; and a second pair (37,38) of the said sliding seats second defining respective second sliding directions (37a,38a) for the said at least one regulating component (40), parallel with each other and essentially orthogonal with the said first sliding direction (35a,36a).

4. Modular unit according to claim 3, characterised in that the sliding seats of each of the first pair (35,36) and of the second pair (37,38) are located on opposing tracks in relation to the centre of the said containing canopy (5); the said first pair of sliding seats (35,36) being formed through a bottom face (13) of the said containing canopy (5), the said second pair of sliding seats (37,38) being formed passing through a side face (15) of the said containing canopy (5), essentially orthogonal to the said bottom face (13).

5. Modular unit according to one of the claims 2 to 4 characterised in that it also comprises closure components (39) for the said sliding seats (36,37,38) not engaged by the said regulating component (40).

6. Modular unit according to one of the claims 2 to 5 characterised in that the said reflector (8) is fitted with a plurality of coupling seats (44,45,48,49) for an end portion (53) of the said at least one regulating arrangement (40), able to reciprocally link the said at least one regulating arrangement (40) with the said reflector (8); each of the said plurality of connecting seats (44,45,48,49) being arranged to correspond with one of the said sliding seats (35,36,37,38) of the containing canopy (5), the said end portion (53) of the said at least regulating component (40) being selectively inserted in a predefined unit (44) of the said connecting seats (44, 45,48,49) when the said at least one regulating component (40) is inserted into the said predefined sliding seat (35), selected from the said plurality of sliding seats (35,36,37,38).

7. Modular unit according to claim 6, characterised in that the said end portion of the at least one regulating component (40) is a ball head (53), the said coupling seats (44,45,48,49) carried by the said reflector (8) being ball seats complete with respective apertures (46,47,48,49) for releasable insertion of the said ball head (53), respectively aligned with the said sliding directions (35a,36a,37a, 38a).

8. Modular unit according to claim 7, characterised in that, the said reflector (8) has two adjuster blocks (42,43), arranged on opposing strips in relation to the centre-line of said reflector (8); each of the said blocks (42,43) in turn having two of the said coupling seats (44,45; 48,49) for the said ball head (53) of the said at least one regulating component (40), essentially orthogonal with each other.

9. Modular unit according to claim 8, characterised in that, the said reflector (8) has two pins (29,30) to hook onto the said containing canopy (5), releasably coupled with respective securing portions (31,32) of the said containing canopy (5) and defining respective rotation points of the said reflector (8), the said reflector (8) being able to rotate in relation to the said containing canopy (5) about an axis of rotation (33) passing through the said rotation articulations (29,30); the said regulating blocks being arranged on a same side of the said reflector (8) in relation to said axis of rotation (33).

10. Modular unit according to one of claims 4 to 9, characterised in that the said at least one regulating component (40) has a threaded pin (41) able to engage respective threaded portions of the said sliding seats (35,36,37,38) and blocking means (54) to prevent the extraction of the at least one regulating component (40) of the said predefined sliding seat (35).

11. Modular unit according to one of the preceding claims, characterised in that the said means to secure (6) the said containing canopy (5) to the said support structure (3) comprise at least one releasable securing component (60), carried integral with the containing canopy and able to cooperate with at least a respective hook portion (62) for the said support structure (3) to fix the said containing canopy (5) to the said support structure (3); the said at least one releasable securing component (60) being also fitted with retaining components (63) to ensure a fluid seal coupling between said containing canopy (5) and said support structure (3).

12. Modular unit according to claim 11, characterised by the fact that the said securing means (6) of the said containing canopy (5) with the said support structure (3) comprise four releasable fixing components (60) located at a predefined distance one from the other on an external edge (61) of the said containing canopy (5).

13. Modular unit according to one of the preceding claims, characterised in that the said bulb-carrier sub-group (7) comprises means for fixing (21) to the said containing canopy (5) and relative retaining means (22) to achieve the fluid seal retention coupling between the bulb-carrier sub-group (7) and the said containing canopy (5).

14. Modular unit according to claim 13, characterised in that the said bulb-carrier sub-group (7) comprises a bulb-carrier component (17), integrally secured to the said containing canopy (5), a bulb (18) movable in relation to the said bulb carrier component (17) and to the said containing canopy (5) and secured integral with the said reflector (8), and articulated connecting means (65) between the said bulb (18) and the said bulb-carrier (17).

15. Vehicle optical group (2) comprising a lighting modular unit (1) according to any one or other of the preceding claims.
